# EUROPEAN PATENT SPECIFICATION

(11) **EP 3 260 264 B1**
(45) Date of publication and mention of the grant of the patent: **06.09.2023**
(21) Application number: 17176737.9
(22) Date of filing: 19.06.2017
(51) Int. Cl.: B29C 45/14, B29C 45/16, A41D 13/015, A41D 31/00, A41D 13/05, B29D 35/14, A43B 7/32, A43B 13/04, A43B 13/16, B29L 31/48, B29L 31/00

(54) **CONJUNCTION METHOD FOR TWO ELEMENTS AND PRODUCT**
VERFAHREN ZUR VERBINDUNG VON ZWEI ELEMENTEN UND PRODUKT
PROCÉDÉ DE CONJONCTION DE DEUX ÉLÉMENTS ET PRODUIT

(30) Priority: 21.06.2016 IT UA20164573
(43) Date of publication of application: 27.12.2017
(73) Proprietor: Tryonic Ltd, London N3 1DP (GB)
(72) Inventor: PARONETTO, GIUSEPPE, LONDON, Greater London (GB)
(74) Representative: Citron, Massimiliano

(56) References cited:
- EP-A1- 2 993 086
- US-A1- 2015 059 047

## Description

The invention refers to a coupling method for two elements, wherein one of the two elements to be attached to each other is made of foam material and the other of elastic material. The invention refers as well to an object produced by the method,

A known prior art is represented by EP2993086 A1.

In the field of anti-shock protections for motorcyclists there is a lot of fervor to provide the rider with a protection for the back that is durable and at the same time comfortable. The back protector is usually an assembly of a rigid shell and a shock-absorber material that the rider fastens on his back. The plate can not be too rigid, otherwise it would prevent the movements, therefore it is produced by joining together pieces of different rigidity. There are also soft protections made up of overlapping one-piece sheets of foam or expanded material that are flexible but do not offer the degree of ideal comfort. This family of protectors can not have intermediate zones of flexion since it is not easy to obtain areas of elastic conjunction able to ensure lasting adhesion over time and to meet the requirements of impact absorption and protection. For safety reasons and homologation, the pieces must have high resistance to detachment, which unfortunately excludes the use of many otherwise desirable materials because they are chemically incompatible with each other during molding. For example on rubber, hot over-injection of a material is not enough to ensure its durable and lasting adhesion.

The main object of the invention is to improve this state of art.

In particular, the object of the invention is to propose a method for joining two materials that during hot molding are chemically incompatible and do not attach to each other.

Another particular object of the invention is to allow the use of new materials to produce personal protective equipment or shoes through their mechanical coupling by over-molding.

Another particular object of the invention is to provide an anti-bump protection for motorcyclists, e.g. a back protector, that is durable and comfortable at the same time.

A first aspect of the invention is a method of conjunction as in claim 1.

Thanks to the injection temperature of the second portion the adhesive is reactivated and glues to the latter. The adhesive is preferably thermoplastic glue.

With the method many types of elastic materials, in particular cured, and expanded plastic materials, in particular thermoplastic materials, can now be used to produce objects with over-molding techniques, impossible before due to chemical incompatibility.

In the method, the first portion is molded inside a mold with vulcanized material, to prepare the first portion.

In the method:
- the adhesive is applied to an edge of the first portion, which is e.g. molded as defined above,
- the adhesive is awaited to be dry and solidify,
- the first portion is put in a mold having the layer of adhesive on it,
- thermoplastic material is over-molded on said edge in order to mold the second portion and to reactivate the adhesive to achieve the conjunction of the two portions.

To use the multi-portion object, the assembly given by the two portions is pulled out of the mold.

Preferably, the over-injected thermoplastic material has a temperature of 120 to 160 °C, more preferably 140 °C, or anyway between 120-180 °C as it represents the ideal temperature of fusion and injection for the elastomer to be injected. This temperature is able to activate the glueing capability of the thermoplastic glue previously deposited on the vulcanized part.

Preferably the thermoplastic material is SBS or PVC.

Preferably the thermoplastic glue is a mastic.

Preferably the vulcanized material is rubber.

The two portions are comprised in, or constitute, an anti-shock protection element.

The anti-shock protection element is a protection plate for a person's back, or an articular protection for the elbow or the shoulder of a person. The protection plate for the back is e.g. a rigid shell that can be attached to the back.

According to another preferred variant of the method, the made conjunction is of flexible type, that is, not rigid. The second portion can then move or deform with respect to the first one, with the advantage, for example, of giving greater mobility and comfort to the protection.

According to another preferred variant of the method, the made conjunction is of elastic type, i.e. the material of the second portion has shape memory and/or can stretch or squeeze going back to its starting shape. The advantage is e.g. to give even greater mobility and comfort to the protection.

The method preferably comprises
injecting the second portion with a material that when solidified remains compressible and/or flexible; and/or
injecting the second portion into a mold to make the second molded portion so that it comprises or is constituted of a lattice or trellis structure, wherein the lattice or trellis is made of flexible and/or deformable segments.

Preferably, the second portion comprises a flat edge or strip that is attached on said edge of the first portion and the lattice or trellis structure develops from the flat edge or strip of the second portion.

According to another preferred variant of the method, the made conjunction generally serves to join an alternate plurality of first portions and second portions. Thus an object is produced that altogether is formed by an alternate sequence of second portions and first portions.

According to another preferred variant of the method, the created conjunction serves to combine an alternate plurality of first portions and second portions, so that every second portion on opposites sides is connected to, and connects, two sides or margins of two first portions. So, the first portions can move relatively thanks to the mechanical deformation of the intermediate second portion. In this variant, preferably a junction of the elastic type is carried out.

A second aspect of the invention is an object producible or produced by the aforesaid conjunction method, generally an anti-shock protection element for a person, with a structure comprising portions articulated to each other. The produced object with the aforesaid method is an anti-bump protection element for a person, especially the back (a plate or shell of back protection), the joints or the shoulder.

Said object comprises or consists of a first portion made of foam material, particularly vulcanized (cured), and a second portion made of elastic material, in particular thermoplastic material, the two portions being connected by means of a thermoplastic adhesive, e.g. arranged on the first portion (e.g. an edge or a flat surface) to attach the second portion. For the types of materials for the object, the variants of the method hold as well.

Said object is a back protection plate for a person, or an articular elbow or shoulder protection for a person. The first and second portions form an articulated structure of the object.

In particular, to form the protection plate, the first and second portions are flat or substantially flat elements, and the thermoplastic adhesive that connects them is placed on adjacent edges of theirs. Even more particularly, the first and second portions have a preferably substantially equal thickness, and the thermoplastic adhesive is placed on facing walls of the portions or adjacent edges, wherein the walls extend along the direction of the thickness.

Preferably, in the object - and in particular with reference to the protection plate or shell for the back - the second portion comprises a flat edge or strip attached by the adhesive to an edge of the first portion, and a lattice or trellized structure develops from the flat edge or strip of the second portion.

The lattice or trellis structure comprises, for example, flexible and/or deformable fins or elements, thus two first portions connected by the second portion are articulated to each other.

For higher lightness preferably, the flexible and/or deformable fins or elements delimit pass-through openings in the second portion.

According to another preferred variant of the object, it comprises an alternating plurality of first portions and second portions joined together. Thus an object is produced that is generally formed by an alternate sequence of second portions and first portions.

According to another preferred variant of the object, it comprises an alternate plurality of first portions and second portions joined together, wherein each second portion on opposite sides is connected to, and connects, two sides or margins of two first portions, so that the first portions can move relatively thanks to the mechanical deformation of the intermediate second portion.

Specifically, the object comprises a single level or layer or plane of material, given by a sequence of first and second portions interconnected with each other and substantially coplanar. That is, the object is only constituted of a sequence of said portions interconnected with each other, wherein two first portions are attached to opposite edges of a second portion through said adhesive. In particular, if the portions are flat the object forms as a whole a plate, or a flat or laminar structure.

Preferably, in the object - and in particular with reference to the plate or shell for the back - the first portion comprises or consists of a lattice or trellis structure, to be light and durable.

The lattice or trellis structure of the first portion preferably delimits pass-through openings, to improve its breathability.

Particularly, the first portion is a planar grid or honeycomb structure with pass-through openings having a circular, or hexagonal, or square shape etc.

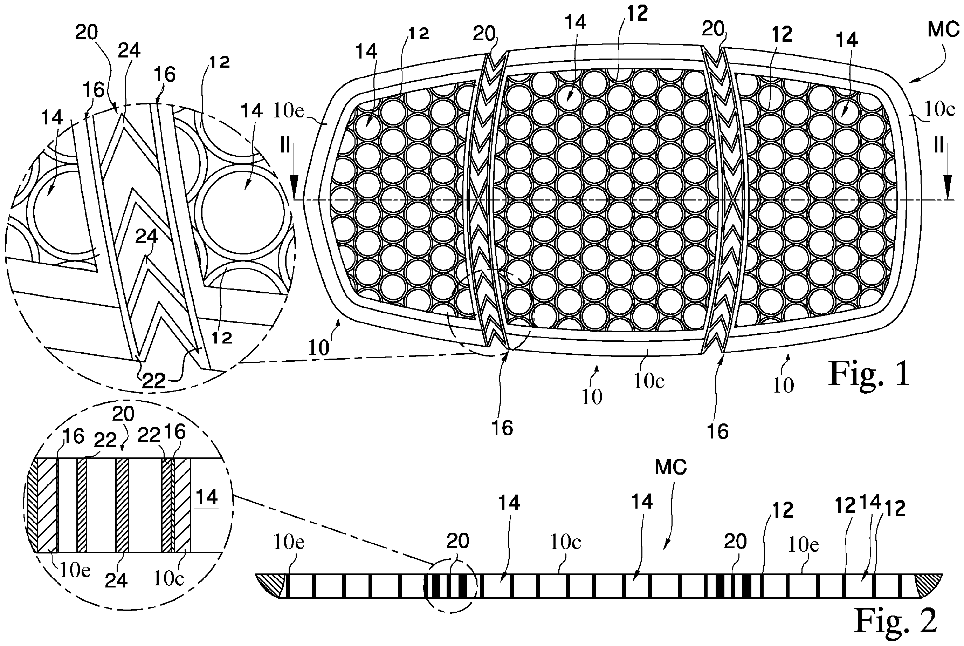

To further illustrate the advantages of the invention, a preferred embodiment will now be described with reference to the drawing, wherein
fig. 1 shows a front view of a back protector;
fig. 2 shows a sectional view according to plane II-II of the protector of fig. 1.

In the figures, same numbers indicate equal parts. To not weigh the drawing, sometimes not all the same elements are numbered.

A protector MC is formed by the juxtaposition of a first type of portions 10 and of a second type of portions 20. Only for sake of exposure we divide the portions 10 into end portions 10e and into central portions 10c.

Each portion 10e, 10c is made of rigid or semi-rigid vulcanized material, e.g. rubber. It has a perimeter edge and a lightened structure inside, such as e.g. a perforated or alveolar frame formed by ribs 12 delimiting pass-through openings 14. One or two edges 16 of a portion 10e, 10c are attached to a portion 20, which connects a portion 10e to the rest of the protector MC (i.e. a portion 10c) or two portions 10e, 10c to each other.

The portion 20 is made of thermoplastic material. It comprises two flat or curved edges 22, between which a perforated or alveolar structure, formed by flexible and/or elastic flanges 24, extends.

As can be seen from the enlargements, between adjacent portions 10 and 20 there is a layer 30 of adhesive, deposited after molding the portion 10e, 10c and before molding the portion 20.

A method for producing the protector MC is as follows:
- the various portions 10e, 10c are molded inside a mold by injecting rubber, then left to cool;
- at the end portions 10e adhesive 30 is applied on a single edge 16, then waiting for it to dry and solidify,
- at the central portions 10e adhesive 30 is applied on the two opposing edges 16, then waiting for it to dry and solidify,
- each portion 10e, 10c provided with the deposited layer of adhesive 30 is put into a mold,
- over each edge 16 covered by adhesive 30 a portion 20 is over-injected, so the adhesive 30 is heated and adheres to the portion 20 by joining it to the respective portion 10e, 10c. The two portions 10, 20 will be firmly attached when they cool down and are extracted from the mold.

One can mold a single portion 20 at a time on an edge 16, or more portions 20 on different edges 16 of one or more portions 10. In the illustrated example, one could first mold all the portions 10e, 10c and then simultaneously mold the two portions 20 that join them.

With the method, there is no limitation on the number of portions 10, 20 which sequentially make up the protector MC or in general the produced object.

As a resistance test, a car was towed by the protector MC, which did not break.

## Claims

1. Method of conjunction between a first portion (10) and a second portion (20) of an anti-collision protection element for a person's back, or a joint protection for the elbow or the shoulder of a person,
the first portion (10) being
molded inside a mold with vulcanized material and
made of foam material, in particular cured material, and
the second portion (20) being of elastic material, in particular thermoplastic material,
so that the two portions are interconnected after molding the second portion on the first one,
**characterized by the steps of:**
depositing a thermoplastic adhesive (30) on the first portion, and
over-molding the second portion on the first portion in correspondence of the adhesive, **and in that**
• the adhesive is applied to an edge of the first portion,
• the adhesive is awaited to be dry and solidify,
• the first portion is put in a mold having the layer of adhesive on it,
• thermoplastic material is over-moulded on said edge in order to mold the second portion and to reactivate the adhesive to achieve the conjunction of the two portions.

2. Method according to any one of the preceding claims, wherein the over-molded thermoplastic material has a temperature between 120-180 °C.

3. Method according to any one of the preceding claims, wherein the thermoplastic material is PVC or SBS, and the cured material is rubber.

4. Method according to any one of the preceding claims, with the steps of injecting the second portion in a mold to carry out the second molded portion so that it comprises or consists of a trellis or lattice structure, wherein the lattice or trellis is formed by flexible and/or deformable segments.

5. Back protector (MC) for motorcyclists, or articular protection for the elbow or the shoulder of a person, produced by the method of any one of the preceding claims,
**characterized by** comprising a structure comprising portions articulated to each other, wherein
a first portion (10) is made of foam material, and
a second portion (20) is made of elastic material,
the two portions being connected together by means of a thermoplastic adhesive (30).

6. Back protector (MC) for motorcyclists, or articular protection for the elbow or the shoulder of a person, according to claim 5, wherein the first and second portions (10, 20) have substantially equal thickness, and the thermoplastic adhesive (30) is placed on facing walls (16) of the portions or adjacent edges, wherein the walls extend along the direction of the thickness.

7. Back protector (MC) for motorcyclists, or articular protection for the elbow or the shoulder of a person, according to claim 5 or 6, wherein the second portion (20) comprises
a flat edge or strip attached with adhesive to an edge of the first portion (10), and
a reticule or lattice structure which develops from the flat edge or strip of the second portion.

8. Back protector (MC) for motorcyclists, or articular protection for the elbow or the shoulder of a person, according to claim 7, wherein the lattice or reticule structure comprises flexible and/ or deformable fins or elements bounding pass-through openings in the second portion.

9. Back protector (MC) for motorcyclists, or articular protection for the elbow or the shoulder of a person, according to any one of the preceding claims, wherein the first portion (10) comprises or consists of a lattice or trellis structure.

10. Back protector (MC) for motorcyclists, or articular protection for the elbow or the shoulder of a person, according to claim 9, wherein the lattice or trellis structure of the first portion (10) delimits pass-through openings.

11. Back protector (MC) for motorcyclists, or articular protection for the elbow or the shoulder of a person, according to any one of the preceding claims, wherein the first portion (10) is a planar grid or honeycomb structure with pass-through openings having a circular, or hexagonal, or square shape.

12. Back protector (MC) for motorcyclists, or articular protection for the elbow or the shoulder of a person, according to any one of the preceding claims, comprising a plurality of alternating first portions (10) and second portions (20) joined to each other, wherein every second portion on opposite sides is connected to, and interconnects, two sides or margins of two first portions.

13. Back protector (MC) for motorcyclists, or articular protection for the elbow or the shoulder of a person, according to any one of the preceding claims, comprising a single layer or plane of material, given by a sequence of first and second portions (10, 20) interconnected with each other and substantially coplanar, two first portions being attached to opposite edges of a second portion through said adhesive (30).

14. Back protector (MC) for motorcyclists, or articular protection for the elbow or the shoulder of a person, according to any one of the preceding claims, wherein the first portion (10) is made of cured material.

15. Back protector (MC) for motorcyclists, or articular protection for the elbow or the shoulder of a person, according to any one of the preceding claims, wherein the second portion (20) is made of thermoplastic material.

## Patentansprüche

1. Verfahren zur Verbindung eines ersten Teils (10) mit einem zweiten Teil (20) eines Antikollisionsschutzelements für den Rücken einer Person oder eines Gelenkschutzes für den Ellbogen oder die Schulter einer Person, wobei
der erste Teil (10) ist
in einer Form mit vulkanisiertem Material geformt und
aus Schaumstoff, insbesondere aus ausgehärtetem Material, und
der zweite Teil (20) besteht aus elastischem Material, insbesondere aus thermoplastischem Material,
so dass die beiden Teile nach dem Anformen des zweiten Teils an den ersten Teil miteinander verbunden sind,
**gekennzeichnet durch** die folgenden Schritte:
Aufbringen eines thermoplastischen Klebstoffs (30) auf den ersten Abschnitt, und
Überformen des zweiten Teils auf dem ersten Teil in Übereinstimmung mit dem Klebstoff,
und **dadurch gekennzeichnet** dass
• der Klebstoff wird auf eine Kante des ersten Teils aufgetragen,
• der Klebstoff muss trocknen und fest werden,
• der erste Teil wird in eine Form gelegt, auf der sich die Klebstoffschicht befindet,
• Thermoplastisches Material wird auf diese Kante aufgegossen, um den zweiten Teil zu formen und den Klebstoff zu reaktivieren, um die Verbindung der beiden Teile zu erreichen.

2. Verfahren nach einem der vorhergehenden Ansprüche, wobei das umspritzte thermoplastische Material eine Temperatur zwischen 120 und 180 °C hat.

3. Verfahren nach einem der vorhergehenden Ansprüche, wobei das thermoplastische Material PVC oder SBS ist und das gehärtete Material Gummi ist.

4. Verfahren nach einem der vorhergehenden Ansprüche, mit den Schritten des Einspritzens des zweiten Teils in eine Form, um den zweiten geformten Teil so auszuführen, dass er eine Gitter- oder Gitterstruktur umfasst oder daraus besteht, wobei das Gitter oder die Gitterstruktur durch flexible und/oder verformbare Segmente gebildet wird.

5. Rückenprotektor (MC) für Motorradfahrer, oder Gelenkschutz für den Ellenbogen oder die Schulter einer Person, hergestellt nach dem Verfahren eines der vorhergehenden Ansprüche,
**dadurch gekennzeichnet, dass** sie eine Struktur mit aneinander angelenkten Teilen umfasst, wobei
ein erster Teil (10) besteht aus Schaumstoff, und
ein zweiter Teil (20) ist aus elastischem Material hergestellt,
wobei die beiden Teile sind durch einen thermoplastischen Klebstoff (30) miteinander verbunden.

6. Rückenprotektor (MC) für Motorradfahrer, oder Gelenkschutz für den Ellbogen oder die Schulter einer Person, nach Anspruch 5, wobei der erste und der zweite Abschnitt (10, 20) im Wesentlichen die gleiche Dicke aufweisen und der thermoplastische Klebstoff (30) an den einander zugewandten Wänden (16) der Abschnitte oder an den benachbarten Kanten angebracht ist, wobei sich die Wände entlang der Richtung der Dicke erstrecken.

7. Rückenprotektor (MC) für Motorradfahrer, oder Gelenkschutz für den Ellbogen oder die Schulter einer Person, nach Anspruch 5 oder 6, wobei der zweite Abschnitt (20)
einem Rand oder Streifen, der mit Klebstoff an einem Rand des ersten Teils (10) befestigt ist, und
eine netz- oder gitterartige Struktur, die sich aus dem Rand oder Streifen des zweiten Teils entwickelt,
umfasst.

8. Rückenprotektor (MC) für Motorradfahrer, oder Gelenkschutz für den Ellbogen oder die Schulter einer Person, nach Anspruch 7, wobei die Gitter- oder Netzstruktur flexible und/oder verformbare Rippen oder Elemente umfasst, die Durchgangsöffnungen im zweiten Teil begrenzen.

9. Rückenprotektor (MC) für Motorradfahrer, oder Gelenkschutz für den Ellbogen oder die Schulter einer Person, nach einem der vorhergehenden Ansprüche, wobei der erste Teil (10) eine Gitter- oder Spalierstruktur aufweist oder daraus besteht.

10. Rückenprotektor (MC) für Motorradfahrer, oder Gelenkschutz für den Ellbogen oder die Schulter einer Person, nach Anspruch 9, wobei die Gitter- oder Spalierstruktur des ersten Teils (10) Durchtrittsöffnungen abgrenzt.

11. Rückenprotektor (MC) für Motorradfahrer, oder Gelenkschutz für den Ellbogen oder die Schulter einer Person, nach einem der vorhergehenden Ansprüche, wobei der erste Teil (10) eine ebene Gitter- oder Wabenstruktur mit Durchgangsöffnungen ist, die eine kreisförmige oder sechseckige oder quadratische Form haben.

12. Rückenprotektor (MC) für Motorradfahrer, oder Gelenkschutz für den Ellbogen oder die Schulter einer Person, nach einem der vorhergehenden Ansprüche, umfassend eine Vielzahl von abwechselnd miteinander verbundenen ersten Abschnitten (10) und zweiten Abschnitten (20), wobei jeder zweite Abschnitt auf gegenüberliegenden Seiten mit zwei Seiten oder Rändern von zwei ersten Abschnitten verbunden ist und diese miteinander verbindet.

13. Rückenprotektor (MC) für Motorradfahrer, oder Gelenkschutz für den Ellbogen oder die Schulter einer Person, nach einem der vorhergehenden Ansprüche, umfassend eine einzige Materialschicht oder -ebene, die durch eine Folge von ersten und zweiten Abschnitten (10, 20) gegeben ist, die miteinander verbunden und im Wesentlichen koplanar sind, wobei zwei erste Abschnitte an gegenüberliegenden Kanten eines zweiten Abschnitts durch den Klebstoff (30) befestigt sind.

14. Rückenprotektor (MC) für Motorradfahrer, oder Gelenkschutz für den Ellbogen oder die Schulter einer Person, nach einem der vorhergehenden Ansprüche, wobei der erste Teil (10) aus ausgehärtetem Material besteht.

15. Rückenprotektor (MC) für Motorradfahrer, oder Gelenkschutz für den Ellbogen oder die Schulter einer Person, nach einem der vorhergehenden Ansprüche, wobei der zweite Teil (20) aus thermoplastischem Material besteht.

## Revendications

1. Procédé de liaison d'une première partie (10) à une deuxième partie (20) d'un élément de protection anticollision pour le dos d'une personne ou d'une protection articulaire pour le coude ou l'épaule d'une personne,
la première partie (10) est moulé dans un moule avec un matériau vulcanisé et en mousse, notamment en matériau durci, et
la deuxième partie (20) est constituée d'un matériau élastique, en particulier d'un matériau thermoplastique,
de sorte que les deux parties soient reliées entre elles après le moulage de la deuxième partie sur la première,
**caractérisé par** les étapes suivantes:
l'application d'un adhésif thermoplastique (30) sur la première partie; et
surmoulage de la deuxième partie sur la première partie en accord avec l'adhésif,
**et dans ce**
• la colle est appliquée sur un bord de la première pièce,
• la colle doit sécher et se solidifier,
• la première pièce est placée dans un moule sur lequel se trouve la couche de colle,
• un matériau thermoplastique est coulé sur cette arête pour former la deuxième partie et réactiver la colle afin de réaliser l'assemblage des deux parties.

2. Procédé selon l'une quelconque des revendications précédentes, dans lequel le matériau thermoplastique surmoulé a une température comprise entre 120 et 180 °C.

3. Procédé selon l'une quelconque des revendications précédentes, dans lequel le matériau thermoplastique est du PVC ou du SBS et le matériau durci est du caoutchouc.

4. Procédé selon l'une quelconque des revendications précédentes, comprenant les étapes d'injection de la deuxième partie dans un moule pour réaliser la deuxième partie moulée de manière à comprendre ou à être constituée d'une structure de grille ou de treillis, la grille ou la structure de treillis étant formée par des segments flexibles et/ou déformables.

5. Protecteur dorsal (MC) pour motocyclistes, ou protecteur articulaire pour le coude ou l'épaule d'une personne, fabriqué selon le procédé de l'une des revendications précédentes,
**caractérisé en ce qu'**il comprend une structure avec des parties articulées les unes aux autres, dans laquelle
une première partie (10) est constituée de mousse, et
une deuxième partie (20) est réalisée en matériau élastique, et
les deux parties sont reliées entre elles par une colle thermoplastique (30).

6. Protecteur dorsal (MC) pour motocyclistes, ou protecteur articulaire pour le coude ou l'épaule d'une personne, selon la revendication 5, dans lequel les première et deuxième sections (10, 20) ont sensiblement la même épaisseur et l'adhésif thermoplastique (30) est appliqué sur les parois (16) des sections qui se font face ou sur les bords adjacents, les parois s'étendant dans la direction de l'épaisseur.

7. Protecteur dorsal (MC) pour motocyclistes, ou protecteur articulaire pour le coude ou l'épaule d'une personne, selon la revendication 5 ou 6, dans lequel la deuxième section (20) comprend
un bord ou une bande fixée par un adhésif à un bord de la première partie (10), et
une structure en forme de filet ou de grille qui se développe à partir du bord ou de la bande de la deuxième partie.

8. Protecteur dorsal (MC) pour motocyclistes, ou protecteur articulaire pour le coude ou l'épaule d'une personne, selon la revendication 7, dans lequel la structure de grille ou de filet comprend des nervures ou des éléments flexibles et/ou déformables qui délimitent des ouvertures de passage dans la deuxième partie.

9. Protecteur dorsal (MC) pour motocyclistes, ou protecteur articulaire pour le coude ou l'épaule d'une personne, selon l'une des revendications précédentes, dans lequel la première partie (10) présente une structure en treillis ou en espalier ou en est constituée.

10. Protecteur dorsal (MC) pour motocyclistes, ou protecteur articulaire pour le coude ou l'épaule d'une personne, selon la revendication 9, dans lequel la structure en grille ou en treillis de la première partie (10) délimite des ouvertures de passage.

11. Protecteur dorsal (MC) pour motocyclistes, ou protecteur articulaire pour le coude ou l'épaule d'une personne, selon l'une des revendications précédentes, dans lequel la première partie (10) est une structure plane en treillis ou en nid d'abeilles avec des ouvertures traversantes qui ont une forme circulaire ou hexagonale ou carrée.

12. Protecteur dorsal (MC) pour motocyclistes, ou protecteur articulaire pour le coude ou l'épaule d'une personne, selon l'une quelconque des revendications précédentes, comprenant une pluralité de premières sections (10) et de secondes sections (20) reliées entre elles en alternance, chaque seconde section étant reliée sur des côtés opposés à deux côtés ou bords de deux premières sections et les reliant entre elles.

13. Protecteur dorsal (MC) pour motocyclistes, ou protecteur articulaire pour le coude ou l'épaule d'une personne, selon l'une quelconque des revendications précédentes, comprenant une seule couche ou un seul plan de matériau donné par une succession de premières et secondes sections (10, 20) reliées entre elles et sensiblement coplanaires, deux premières sections étant fixées à des bords opposés d'une seconde section par l'adhésif (30).

14. Protecteur dorsal (MC) pour motocyclistes, ou protecteur articulaire pour le coude ou l'épaule d'une personne, selon l'une des revendications précédentes, dans lequel la première partie (10) est constituée d'un matériau durci.

15. Protecteur dorsal (MC) pour motocyclistes, ou protecteur articulaire pour le coude ou l'épaule d'une personne, selon l'une des revendications précédentes, dans lequel la deuxième partie (20) est en matériau thermoplastique.
